# EUROPEAN PATENT SPECIFICATION

(11) **EP 3 650 933 B1**
(45) Date of publication and mention of the grant of the patent: **01.01.2025**
(21) Application number: 19206767.6
(22) Date of filing: 01.11.2019
(51) Int. Cl.: G03B 21/00, G03B 21/28

(54) **ILLUMINATION DEVICE, VEHICLE COMPONENT AND VEHICLE**
BELEUCHTUNGSVORRICHTUNG, FAHRZEUGKOMPONENTE UND FAHRZEUG
DISPOSITIF D'ÉCLAIRAGE, COMPOSANT DE VÉHICULE ET VÉHICULE

(30) Priority: 06.11.2018 US 201816181917
(43) Date of publication of application: 13.05.2020
(73) Proprietor: SMR Patents S.à.r.l., 2411 Luxembourg (LU)
(72) Inventor: SCHMIDT, Oliver, 70327 Stuttgart (DE); FRITZ, Daniel, 70374 Stuttgart (DE); MESSENGER, Jacob, 5160 Lonsdale, SA (AU)
(74) Representative: Weber-Bruls, Dorothée

(56) References cited:
- DE-A1- 102012 024 494
- US-A1- 2018 154 819
- HO HUH YOON ET AL: "Power generating reflective-type liquid crystal displays using a reflective polariser and a polymer solar cell", SCIENTIFIC REPORTS, vol. 5, no. 1, 1 September 2015 (2015-09-01), XP055954551, Retrieved from the Internet <URL:https://www.nature.com/articles/srep11558.pdf> DOI: 10.1038/srep11558

## Description

The following description relates to an illumination device, a vehicle component and a motor vehicle. In particular, the invention refers to an illumination device, comprising at least one illuminant for emitting light; and an optical reflection unit, comprising at least one reflective surface; and at least one surface comprising at least one mask, wherein the optical reflection unit is configured to receive the light emitted from the at least one illuminant and project at least one of an image, a symbol, a logo, a pattern, and a legend on a projection surface.

Illumination devices for motor vehicles are known from the state of the art. Typically, an illumination device includes a number of parts and components including, but not limited to, a condenser lens, a projector lens, a mask, among other components. Multiple illumination device components are typically combined into one housing to form the device. The components may be aligned with one another so that they share a single axis, and light from a light source may follow a path along the single axis so that an image from a mask is projected.

DE 20 2008 016 695 U1, for example, describes an illumination device having a so-called logo lamp in which an image or legend is projected onto a projection surface through the interaction of an illuminant, a condenser unit, a mask means and a lens unit. The illumination device is arranged in a rearview device realized as an external mirror in order to project an image or a legend onto a roadway or sidewalk. The individual components of the illumination device are arranged behind one another in a tubular housing. Because of the essentially vertical course of the optical path, the known illumination device in the external mirror is arranged essentially perpendicular to the projection surface. The illumination device can be integrated directly into an external mirror, or be attached into a corresponding receptacle on the external mirror. Indeed, the rigid arrangement of the individual components of the illumination device in the tubular housing makes it difficult to integrate the illumination device into or onto the external mirror because of the limited space.

DE 101 34 594 A1 describes an illumination device which is adapted to project an object correlated with the driving situation into a surrounding area of a vehicle.

DE 10 2004 050 600 A1 describes an illumination device for a vehicle for generating a light field in the region of the vehicle door.

US 2009/0161379 A1 describes the projection of a pattern onto a subsurface using an illumination device in an external mirror.

US 2014/0362596 A1, WO 2015/122482 A1 and DE 10 2006 057 671 A1 describe other illumination devices for vehicles and/or components for illumination devices.

US 2018/154819 A1 describes a vehicle lighting apparatus that emits light diagonally toward a road surface from a vehicle includes: a light source; an image generation part that modulates light emitted from the light source and that generates an image; a light-focusing optical system that focuses light having the image generated by the image generation part; and a reflection part that reflects light focused by the light-focusing optical system toward the road surface, wherein the reflection part has a reflection surface having a curvature that is gradually increased from a projection direction rearward side toward a projection direction frontward side.

DE 10 2012 024 494 A1 relates to a motor vehicle and an industrial truck with at least one warning device for securing the working and/or driving area. It is provided that at least one warning device is a projector with which a pictorial information symbol and in particular a pictorial warning symbol can be projected onto the floor or onto a wall surface in the vicinity of the motor vehicle or the industrial truck. The invention further concerns a projector for use as an optical warning device on a motor vehicle or on an industrial truck.

Ho Huh Yoon et al describe "Power generating reflective-type liquid crystal displays using a reflective polarizer and a polymer solar cell" in their article published in Scientific Reports, vol. 5, no. 1, of September 2015.

It is the object of the present invention to further develop the known illumination device to overcome their drawbacks.

This object is solved with claim 1.

In one aspect, an illumination device includes at least one illuminant for emitting light, and an optical reflection unit, including at least one reflective surface, and a surface including at least one mask, where the optical reflection unit is configured to receive the light emitted from the at least one illuminant and project at least one of an image, a symbol, a logo, a pattern, and a legend on a projection surface. According to the invention, the at least one reflective surface includes at least two reflective surfaces, each of the two reflective surfaces on opposite sides of the optical reflection unit, and/or the optical reflection unit includes at least four sides and the light emitted from the at least one illuminant is configured to be projected on at least two of the at least four sides of the optical reflection unit before being projected to the projection surface.

The at least one reflective surface may include at least three reflective surfaces, two of the three reflective surfaces being on a same side of the optical reflection unit and one of the three reflective surfaces being on an opposite side of the optical reflection unit.

The at least one reflective surface and the surface including the at least one mask may be on opposite sides of the optical reflection unit.

The at least one reflective surface and the surface including the at least one mask may be on a same side of the optical reflection unit.

The at least one reflective surface may include metalized or internally reflective freeform optics.

The at least one reflective surface may be at least partly planar or curved.

The surface including the at least one mask may include at least one of an image ablated metalized reflective surface and a micro-optic.

The at least one surface may include the at least one mask and be formed together with one of the at least one reflective surface.

The optical reflection unit may include at least two curved edges and at least on planar edge.

The optical reflective unit may have a freeform geometry.

The light emitted from the at least one illuminant is configured to enter the optical reflection unit from a first side of the optical reflection unit, the light projected to the projection surface is configured to exist the optical reflection unit from a second side of the optical reflection unit, the at least one reflective surface include at least two reflective surfaces with one of the two reflective surfaces being formed on the first side and the other being formed on the second side, and the surface including the at least one mask is formed on the first side.

The at least one surface including the at least one mask may be formed together with the reflective surface on the first side.

The light emitted from the at least one illuminant may be configured to contact an inner surface of the optical reflection unit at least four times before being projected to the projection surface.

The at least one reflective surface may be configured to deflect the optical path in at least one of a range of 35° to 145°, 45° to 135°, 60° to 120°, and about 90°.

The at least one mask may be at least one of mechanically and electrically alterable or adjustable in order to change at least one of an image, a symbol, a logo and a legend that the mask is configured to display on the projection surface.

The at least one reflective surface may include a lens arranged on the at least one reflective surface and configured as a separate or separable component in order to focus the light.

The at least one reflective surface may include at least one of a condenser unit and a lens unit.

The illuminant may emit the light essentially perpendicular to the projection surface.

At least one of the at least one reflective surface or the at least one surface including the at least one mask may be incorporated into the optical reflection unit or separate components arranged close to or attached to the optical reflection unit.

In another aspect of the invention, a vehicle unit of a motor vehicle may include at least one illumination device.

The at least one illumination device may provide a logo lamp, which is adapted to be at least one of moveable relative to the vehicle or attachable to the exterior of the vehicle The vehicle unit may include at least one of an internal or external mirror or camera.

In yet another aspect of the invention, a motor vehicle may include at least one vehicle unit.

The foregoing summary, as well as the following detailed description, will be better understood when read in conjunction with the appended drawings. For the purpose of illustration, certain examples of the present description are shown in the drawings. It should be understood, however, that the invention is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the invention.
- FIG. 1: is a diagram illustrating a first example of an illumination device.
- FIG. 2: is a diagram illustrating a second example of an illumination device.
- FIG. 3: is a diagram illustrating a third example of an illumination device.
- FIG. 4: is a diagram illustrating of a fourth example of an illumination device.
- FIG. 5: is a diagram illustrating a fifth example of an illumination device.
- FIG. 6: is a diagram illustrating a sixth example of an illumination device implementing the present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

Before explaining at least one example of the invention in detail, it is to be understood that the invention is not limited in its application to the details of construction and to the arrangements of the components set forth in the following description or illustrated in the drawings. The Figures and written description are provided to teach any person skilled in the art to make and use the inventions for which patent protection is sought. The invention is capable of other embodiments and of being practiced and carried out in various ways. Those skilled in the art will appreciate that not all features of a commercial embodiment are shown for the sake of clarity and understanding. Persons of skill in the art will also appreciate that the development of an actual commercial embodiment incorporating aspects of the present inventions will require numerous implementation-specific decisions to achieve the developer's ultimate goal for the commercial embodiment. While these efforts may be complex and time-consuming, these efforts nevertheless would be a routine undertaking for those of skill in the art having the benefit of this disclosure.

In addition, it is to be understood that the phraseology and terminology employed herein are for the purpose of description and should not be regarded as limiting. For example, the use of a singular term, such as, "a" is not intended as limiting of the number of items. Also the use of relational terms, such as but not limited to, "top," "bottom," "left," "right," "upper," "lower," "down," "up," "side," are used in the description for clarity in specific reference to the Figures and are not intended to limit the scope of the invention or the appended claims. Further, it should be understood that any one of the features of the invention may be used separately or in combination with other features. Other systems, methods, features, and advantages of the invention will be or become apparent to one with skill in the art upon examination of the Figures and the detailed description. It is intended that all such additional systems, methods, features, and advantages be included within this description, be within the scope of the present invention, and be protected by the accompanying claims.

It will be appreciated by those skilled in the art that changes could be made to the embodiments described above without departing from the broad inventive concept thereof. It is understood, therefore, that the invention disclosed herein is not limited to the particular embodiments disclosed, but it is intended to cover modifications within the spirit and scope of the present invention as defined by the appended claims.

The figures each depict an illumination device 2 for a vehicle component of a motor vehicle as in the form of an external mirror or camera, for example. The depicted illumination devices 2 each include an illuminant 4 by means of which light can be emitted, essentially parallel to a plane of a projection surface 8 for example.

In addition, each illumination device 2 includes at least one condenser lens 10 of a condenser unit 12. The condenser lens 10 couples the light emitted by the illuminant 4 into an optical path 6, which can also run essentially parallel to the plane of the projection surface 8, depending on the embodiment example.

As depicted in the figures, the illumination device 2 also includes at least one objective lens 14 of a lens unit 16.

In order to display a logo, for example, onto the projection surface 8, the illumination device 2 furthermore includes a mask means 18.

The illumination devices 2 illustrated in the figures furthermore each include a reflector unit 20, which makes it possible for the optical path 6 to be deflected essentially transversely or diagonally to the projection surface 8.

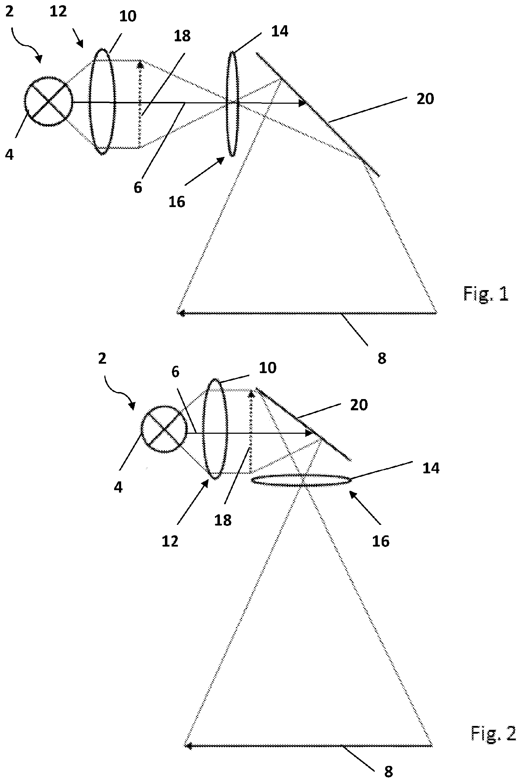

FIG. 1 depicts a first example of the illumination device 2. In this example, the condenser unit 12, which also includes the condenser lens 10, is provided directly following the illuminant 2. Subsequently, the light passes through the mask means 18 before it impinges on the objective lens 14, which is included in the lens unit 16. In the further course of the optical path 6, the light then impinges on the reflector unit 20, which deflects it by essentially 90° degrees onto the projection surface 8.
FIG. 2 depicts a second example of the illumination device 2. In this example, as also shown in FIG. 1, first the illuminant 4, the condenser unit 12 and the mask means 18 are arranged one behind the other so that the light also passes through these components successively. Then the light does not pass through the lens unit 16 however, but is first deflected on the reflector unit 20. After being deflected by the reflector unit 20, the light passes through the lens unit 16 to then arrive at the projection surface 8. This construction allows a reduction in the space needed for installation.

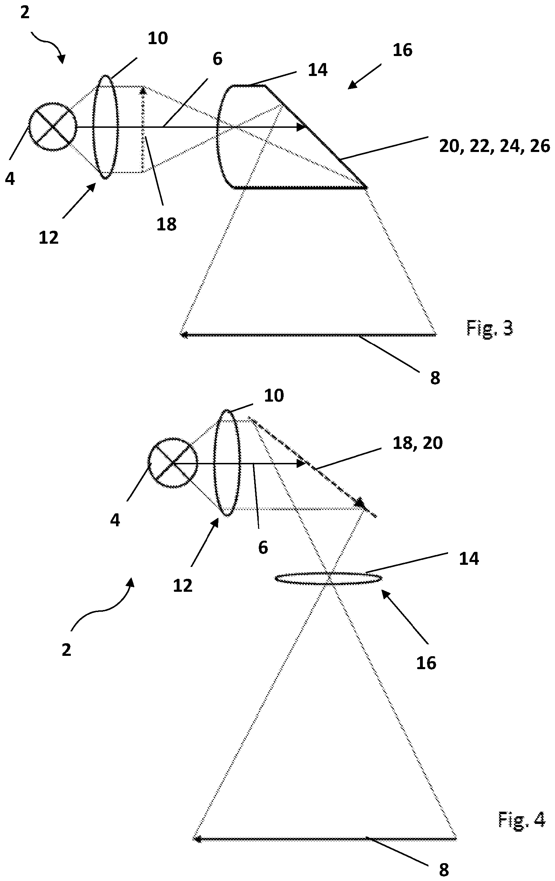

FIG. 3 depicts a third example of the illumination device 2. In this example, the illumination device is implemented with reduced components. The light emitted by the illuminant 4 first passes through the condenser unit 12 and the mask means 18, then, as already shown in FIG. 2, it directly impinges on the reflector unit 20. In the example depicted in FIG. 3, a reflector element 22, which includes a light guide 24 and/or a prism 26, forms the reflector unit 20. The reflector element 22 thereby assumes the function of the lens unit 16. The example of the illumination device 2 depicted in FIG. 3 can thus be produced with reduced components and implemented compactly.
FIG. 4 depicts a fourth example of the illumination device 2. The depicted illumination device 2 essentially corresponds to the illumination device 2 depicted in FIG. 2. In contrast to the illumination device 2 depicted in FIG. 2, here no mask means 18 configured as a separate component is provided between the condenser unit 12 and reflector unit 20. Rather, the mask means 18 and the reflector unit 20 are combined in a common component. The installation dimensions of the illumination device 2 can thereby also be reduced.

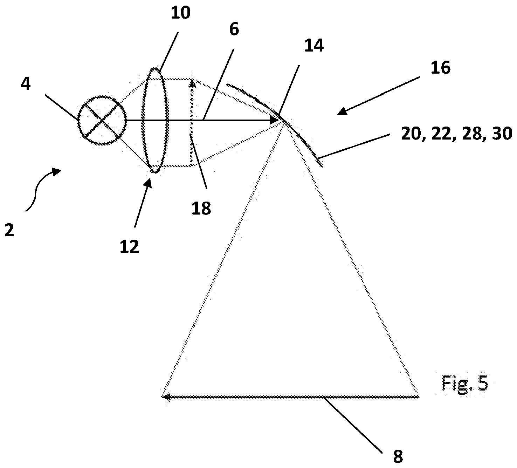

FIG. 5 depicts a fifth example of the illumination device 2. In the depicted example, the lens unit 16 and the reflector unit 20 are included within a common component. In contrast to the example depicted in FIG. 3, the reflector unit 20 does not include a light guide and/or prism as reflector element 22, but is realized by a freeform surface 28, which is configured on a surface section 30 of the reflector element 22.

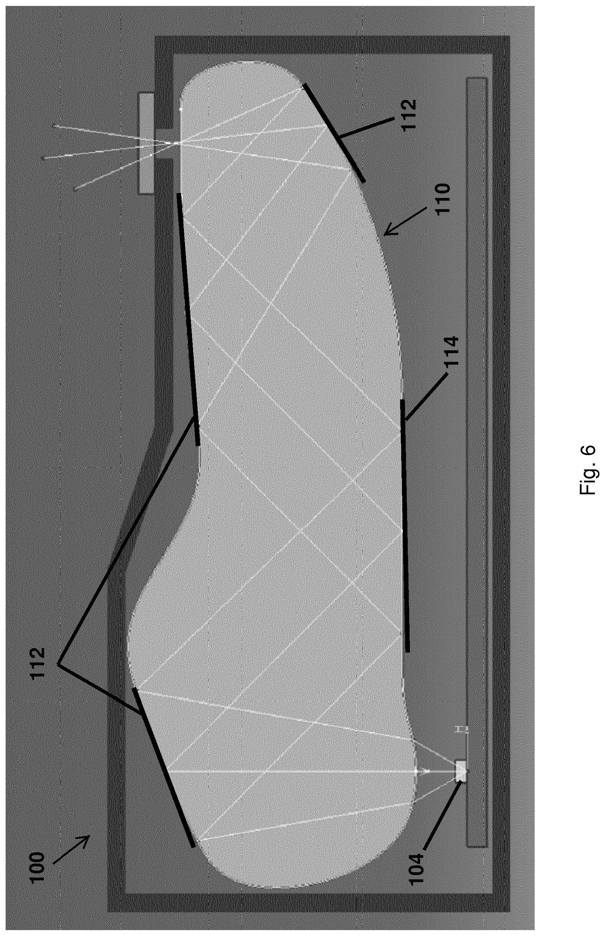

FIG. 6 depicts another example of an illumination device 100, being the illumination device of the invention. The illumination device 100 includes a light source 104. Unlike the illumination device 2 of other examples, the illumination device 100 of this example includes a single optical component 110 instead of multiple components. The single reflective optical component 110 of this example includes a plurality of mirrors and reflective surfaces 112. In a preferred example, the single reflective optical component 110 is freeform in shape with the optical axis being segmented between the plurality of mirrors 112. The plurality of mirrors 112 may include metalized or internally reflective freeform optics and/or surfaces. As a result, the single optical component 110 may replace the lenses in a logo projector system such as the condenser lens 10, the objective lens 14, and the reflector unit 20 described in other examples, i.e. as illustrated in FIGS. 1-5, with a single component. This results in significant assembly advantages over the state of the art as well as cost advantages due to lower piece count.

Still referring to FIG. 6, the single optical component 110 of the illumination device 100 preferably also contains a planar surface with a selectively reflective surface 114 either incorporated into the single optical component 110 or as a separate component arranged close to or attached to the single optical component 110. The surface 114 may be a surface which is an image ablated metalized reflective surface, or may be a micro-optic as used in Digital Light Processing (DLP) applications. In other examples, the surface 114 may be selectively transmissive rather than being reflective, and may be freeform rather than being planar. The surface 114 produces a mask that is then projected by the lamp onto the ground or to the selected projecting surface. As may be appreciated, the mask surface 114 replaces the mask means 18 described in other example thereby further reducing the number of components.

In a preferred example, the surfaces of the reflective surfaces 112 are all internally reflective. In other words, the incident light is below the critical angle of the material which makes a high index material preferable. This is because an internally reflective surface has very high efficiency, i.e. greater than 99%, whereas a coated surface like a mirror is significantly less efficient. In addition, the reflective surfaces 112 preferably do not overlap one another. As a result, the angle of reflection may range from greater than 10 degrees (change in optical path) to less than 170 degrees. In another example, the optical component 110 may be changed to have a more prismatic arrangement where all reflections are over 90 degrees and the shape of the optical component 110 is similar to a staircase.

In the examples described above, the one or more reflective surfaces 112 which are configured to receive incident light from the light source 104 prior to the mask surface 114 are for configured to capture the light from the light source 104 and focus it onto the mask surface 114. The one or more reflective surfaces 112 which are configured to receive incident light after the light is received by the mask surface 114 are configured to project (focus) the mask onto the projection plane. In the preferred example, as many of the reflective surfaces 112 as possible are formed from a material which exhibits total internal reflection rather than refraction, and instead of being plated/painted to form a reflective surface, as described above.

In an aspect, an illumination device for a vehicle component, especially for a rearview device of a motor vehicle, may include at least one illuminant, wherein the illuminant is adapted to emit light. The illumination device furthermore features a condenser unit including at least one condenser lens, wherein the condenser unit is adapted to focus the light emitted by the at least one illuminant into an optical path. The term "optical path" in this connection refers to the geometrical course of light beams and can also be called beam direction. The term "focus" refers to coupling light into an optical path, wherein as large a portion of the emitted light of the illuminant as possible is to be brought into the image-forming optical path. Moreover, the illumination device features at least one mask means, which is arranged in the optical path and by means of which an image, symbol, logo and/or legend can be displayed on a projection surface. Moreover, the illumination device features a lens unit having at least one objective lens, which is arranged in the optical path. According to the invention, the illumination device also features at least one reflector unit which is arranged between the condenser unit and the projection surface, wherein the reflector unit is adapted to deflect the optical path, especially essentially transversely or diagonally, to the projection surface, wherein the reflector unit includes a reflector element which includes at least one surface section by means of which the light can be deflected relative to the optical path, and wherein the surface section of the reflector element is configured as a freeform surface in order to focus the light. In this connection, the expression "deflect transversely or diagonally to the projection surface" relates to a deflection or diversion of the optical path at an angle to the vertical to the projection surface. "Deflection of the optical path" can also be understood as a deflection of an optical axis. In this connection, the term "optical axis" describes the averaged propagation direction of all beams in the image-forming optical path between successive units

The use of the reflector unit allows the illumination device to be arranged in or on the vehicle component in a place-saving manner. The illumination device according to the invention does not need to be arranged exclusively vertical to a projection surface, but can also be arranged diagonally to the projection surface for example or parallel to the projection surface. This facilitates the integration of the illumination device to the extent that a particular place does not absolutely have to be provided for the illumination device, but the illumination device can rather be provided in the vehicle component at a location and with an orientation that just happens to offer adequate space for its installation.

In one example, the reflector unit is adapted to deflect the optical path in a range of 35° to 145°, preferably of 45° to 135°, more preferably of 60° to 120°, especially by 90°.

In another example of the invention, the at least one reflector unit is arranged along the optical path of the light, proceeding from the illuminant up to the projection surface, in front of or behind the lens unit. In addition, the at least one reflector unit can however also be arranged any place inside the illumination device. It is basically conceivable that the illumination device includes a plurality of reflector units. This proves advantageous particularly when the installation space available inside the vehicle component is not straight, but angular.

It is furthermore conceivable that the illuminant is surrounded by another reflector means in such a manner that light which is not coupled into the optical path is collected by the reflector means and coupled into the optical path. This allows the intensity of the light in the optical path and the utilization of the light emitted by the illuminant to be improved.

In still another example, the mask means is arranged along the optical path of the light, proceeding from the illuminant up to the projection surface, between the condenser unit and the lens unit.

In one example, the reflector unit includes the mask means. The illumination device can be realized compactly and with reduced components if the reflector unit includes the mask means. In this case, the mask means and reflector unit can be included within a common component for example, or be joined in such a manner that they are undetectably or detachably connected together and can be added in as a pre-assembled subassembly of the reflector unit.

In another example, the mask means is mechanically and/or electrically alterable or adjustable in order to change the image, symbol, logo and/or the legend that the mask means can display on the projection surface. It is also basically conceivable to prescribe that the mask means cannot change the image, symbol, logo and/or the legend that the mask means can display on the projection surface. In addition, the mask means can display a plurality of images or a continuous legend, for example.

The reflector unit can basically be configured as desired. In one example, the reflector unit includes a lens means arranged on the reflector element and configured as a separate or separable component in order to focus the light. In this example, the lens means can include the condenser unit and/or the lens unit.

If the surface section of the reflector element is configured as a freeform surface, then the reflector unit can be implemented compactly.

If a plurality of reflector units is provided, then it is conceivable for example that a first reflector unit includes the condenser unit and a second reflector unit includes the lens unit. This allows the number of individual components in the illumination device to be further reduced.

In another example, the reflector unit includes both the mask means and also the condenser unit and/or the lens unit. This advantageously allows the number of components of the illumination device to be further reduced. The configuration of the reflector unit both as mask means and also as condenser unit and/or as lens unit is then especially advantageous when little space is available in the vehicle component to arrange the illumination device therein or thereon.

In one example, the reflector unit includes both the mask means and also the condenser unit and/or the lens unit. In still another example, the reflector element includes a light guide and/or a prism.

In a further example, the at least one condenser lens of the condenser unit and/or the at least one objective lens of the lens unit includes at least one tonic lens element. This thereby advantageously allows rectangular displays with high irradiance, even in corners, to be realized in a simple manner.

If the illumination device according to the invention is arranged parallel to a plane of a projection surface, then the illuminant can also emit the light essentially parallel to the projection surface. A diagonal emission relative to the projection surface is also conceivable.

The at least one condenser lens of the condenser unit and/or the at least one objective lens of the lens unit can be developed fundamentally or as desired.

In addition, the invention provides a vehicle component of a motor vehicle having at least one illumination device according to the invention. The vehicle component can be any component on the vehicle that is arranged so that it can enable access to the external surroundings of the motor vehicle. To this end, it can for example concern a body panel for example, a bumper device, elements of the vehicle doors and the like. Preferably this vehicle component can include a rearview device, like interior or exterior mirror or camera.

In one example, the optical path of the light directly emitted by the illuminant runs essentially parallel to a driving surface. Since the optical path runs essentially parallel to the driving surface, the illumination device is essentially arranged horizontally. In addition, it is nevertheless conceivable that the illumination device is arranged running diagonally or vertically to the driving surface.

In another example, at least one hollow space, which forms a housing for the illumination device and within which the illumination device can be fixed, is configured in the vehicle component. It is basically conceivable that the illumination device is fixed on the vehicle component for example. To nevertheless be able to protect the illumination device from damage and soiling, it proves advantageous if the illumination device can be fixed within the vehicle component. In addition to protection from soiling and damage, an arrangement of the illumination device that is optically appropriate is thereby furthermore selected.

### Reference sign list

- 2: illumination device
- 4: illuminant
- 6: optical path
- 8: projection surface / logo
- 10: condenser lens
- 12: condenser unit
- 14: objective lens
- 16: lens unit
- 18: mask means
- 20: reflector unit
- 22: reflector element
- 24: light guide
- 26: prism
- 28: freeform surface
- 30: surface section
- 100: illumination device
- 104: light source
- 110: optical component
- 112: reflective surface / mirror
- 114: mask surface / selectively reflective surface

## Claims

1. An illumination device (100), comprising:
at least one illuminant (104) for emitting light; and
an optical reflection unit (110), comprising:
at least one reflective surface (112, 114); and
at least one surface (114) comprising at least one mask,
wherein the optical reflection unit (110) is configured to receive the light emitted from the at least one illuminant (104) and project at least one of an image, a symbol, a logo, a pattern,
and a legend on a projection surface, **characterized in that**
the optical reflection unit (110) is a single optical component instead of multiple components including a plurality of reflective surfaces (112, 114), wherein at least two reflective surfaces are on opposite sides of the optical reflection unit (110), wherein
• the light emitted from the at least one illuminant (104) is configured to enter the optical reflection unit (110) from a first side of the optical reflection unit (110),
• the light projected to the projection surface is configured to exit the optical reflection unit (110) from a second side of the optical reflection unit (110),
• one of the plurality of reflective surfaces (112, 114) being formed on the first side and another being formed on the second side, and
• the at least one surface (114) comprising the at least one mask is formed on the first side.

2. The illumination device of claim 1, wherein
the optical reflection unit (110) comprises at least four sides and the light emitted from the at least one illuminant (104) is configured to be projected on at least two of the at least four sides of the optical reflection unit (110) before being projected to the projection surface.

3. The illumination device of claim 1 or 2, wherein
the plurality of reflective surfaces (112, 114) comprises at least three reflective surfaces, two of the at least three reflective surfaces being on a same side of the optical reflection unit and one of the at least three reflective surfaces being on an opposite side of the optical reflection unit.

4. The illumination device of any one of the preceding claims, wherein
the plurality of reflective surfaces (112, 114) comprises metalized or internally reflective freeform optics, with preferably the at least one reflective surface being at least partly planar or curved.

5. The illumination device of any one of the preceding claims, wherein
the at least one surface (114) comprising the at least one mask comprises at least one of an image ablated metalized reflective surface and a micro-optic, and/or
the at least one surface (114) comprising the at least one mask being formed together with one (114) of the plurality of reflective surfaces (112, 114).

6. The illumination device of any one of the preceding claims, wherein
the optical reflection unit (110) comprises at least two curved edges and at least on planar edge, with preferably the optical reflective unit having a freeform geometry.

7. The illumination device of any one of the preceding claims, wherein
the at least one surface (114) comprising the at least one mask is formed together with the reflective surface (114) on the first side.

8. The illumination device of any one of the preceding claims, wherein
the light emitted from the at least one illuminant (104) is configured to contact an inner surface of the optical reflection unit (110) at least four times before being projected to the projection surface.

9. The illumination device of any one of the preceding claims, wherein
the at least one reflective surface (112, 114) is configured to deflect the optical path in at least one of a range of 35° to 145°, 45° to 135°, 60° to 120°, and about 90°.

10. The illumination device of any one of the preceding claims, wherein
the at least one mask is at least one of mechanically and electrically alterable or adjustable in order to change at least one of the image, the symbol, the logo and the legend that the mask is configured to display on the projection surface.

11. The illumination device of any one of the preceding claims, wherein
the illuminant emits the light at an angle of between approximately 0 degrees and approximately 20 degrees with respect to a normal axis of the projection surface.

12. A vehicle unit of a motor vehicle in form of an internal or external mirror or camera, comprising at least one illumination device according to any one of the preceding claims.

13. The vehicle unit of claim 12, wherein
the at least one illumination device provides a logo lamp, which is adapted to be at least one of moveable relative to the vehicle or attachable to the exterior of the vehicle.

14. A motor vehicle, comprising at least one vehicle unit according to claim 12 or 13.

## Patentansprüche

1. Beleuchtungsvorrichtung (100), umfassend:
mindestens ein Leuchtmittel (104) zur Lichtemission; und
eine optische Reflexionseinheit (110), umfassend:
mindestens eine reflektierende Fläche (112, 114); und
mindestens eine Fläche (114), die mindestens eine Maske umfasst,
wobei die optische Reflexionseinheit (110) dazu ausgestaltet ist, das von dem mindestens einen Leuchtmittel (104) emittierte Licht zu empfangen und ein Bild, ein Symbol, ein Logo,
ein Muster und/oder eine Legende auf eine Projektionsfläche zu projizieren, **dadurch gekennzeichnet, dass**
es sich bei der optischen Reflexionseinheit (110) um eine einzelne optische Komponente anstelle mehrerer Komponenten, die eine Mehrzahl von reflektierenden Flächen (112, 114) umfasst, handelt, wobei sich mindestens zwei reflektierende Flächen auf gegenüberliegenden Seiten der optischen Reflexionseinheit (110) befinden, wobei
• das von dem mindestens einen Leuchtmittel (104) emittierte Licht dazu ausgestaltet ist, in die optische Reflexionseinheit (110) von einer ersten Seite der optischen Reflexionseinheit (110) einzutreten,
• das auf die Projektionsfläche projizierte Licht dazu ausgestaltet ist, die optische Reflexionseinheit (110) von einer zweiten Seite der optischen Reflexionseinheit (110) aus zu verlassen,
• eine der Mehrzahl von reflektierenden Flächen (112, 114) auf der ersten Seite und eine andere auf der zweiten Seite ausgebildet ist, und
• die mindestens eine Fläche (114), die die mindestens eine Maske umfasst, auf der ersten Seite ausgebildet ist.

2. Beleuchtungsvorrichtung nach Anspruch 1, wobei
die optische Reflexionseinheit (110) mindestens vier Seiten umfasst und das von dem mindestens einen Leuchtmittel (104) emittierte Licht dazu ausgestaltet ist, auf mindestens zwei der mindestens vier Seiten der optischen Reflexionseinheit (110) projiziert zu werden, bevor es auf die Projektionsfläche projiziert wird.

3. Beleuchtungsvorrichtung nach Anspruch 1 oder 2, wobei
die Mehrzahl von reflektierenden Flächen (112, 114) mindestens drei reflektierende Flächen umfasst, wobei sich zwei der mindestens drei reflektierenden Flächen auf derselben Seite der optischen Reflexionseinheit befinden und sich eine der mindestens drei reflektierenden Flächen auf der gegenüberliegenden Seite der optischen Reflexionseinheit befindet.

4. Beleuchtungsvorrichtung nach einem der vorhergehenden Ansprüche, wobei die Mehrzahl von reflektierenden Flächen (112, 114) metallisierte oder innenreflektierende Freiformoptiken umfasst, wobei vorzugsweise die mindestens eine reflektierende Fläche zumindest teilweise plan oder gekrümmt ist.

5. Beleuchtungsvorrichtung nach einem der vorhergehenden Ansprüche, wobei
die mindestens eine Fläche (114), die die mindestens eine Maske umfasst, eine bildabgetragene metallisierte reflektierende Fläche und/oder eine Mikrooptik umfasst, und/oder
die mindestens eine Fläche (114), die die mindestens eine Maske umfasst, zusammen mit einer (114) der Mehrzahl von reflektierenden Flächen (112, 114) ausgebildet wird.

6. Beleuchtungsvorrichtung nach einem der vorhergehenden Ansprüche, wobei die optische Reflexionseinheit (110) mindestens zwei gekrümmte Kanten und mindestens eine plane Kante umfasst, wobei die optische Reflexionseinheit vorzugsweise eine Freiformgeometrie aufweist.

7. Beleuchtungsvorrichtung nach einem der vorhergehenden Ansprüche, wobei die mindestens eine Fläche (114), die die mindestens eine Maske umfasst, zusammen mit der reflektierenden Fläche (114) auf der ersten Seite ausgebildet ist.

8. Beleuchtungsvorrichtung nach einem der vorhergehenden Ansprüche, wobei das von dem mindestens einen Leuchtmittel (104) emittierte Licht dazu ausgestaltet ist, eine Innenfläche der optischen Reflexionseinheit (110) mindestens viermal zu kontaktieren, bevor es auf die Projektionsfläche projiziert wird.

9. Beleuchtungsvorrichtung nach einem der vorhergehenden Ansprüche, wobei die mindestens eine reflektierende Fläche (112, 114) dazu ausgestaltet ist, den optischen Weg in mindestens einem Bereiche 35° bis 145°, 45° bis 135°, 60° bis 120° und/oder etwa 90° abzulenken.

10. Beleuchtungsvorrichtung nach einem der vorhergehenden Ansprüche, wobei es sich bei der mindestens einen Maske zumindest um eine mechanisch und/oder elektrisch veränderbare oder anpassbare Maske handelt, um das Bild, das Symbol, das Logo und/oder die Legende zu ändern, für dessen/deren Anzeige auf der Projektionsfläche die Maske ausgestaltet ist.

11. Beleuchtungsvorrichtung nach einem der vorhergehenden Ansprüche, wobei das Leuchtmittel das Licht in einem Winkel zwischen etwa 0 Grad und etwa 20 Grad in Bezug auf eine normale Achse der Projektionsfläche emittiert.

12. Fahrzeugeinheit eines Kraftfahrzeugs in Form eines Innen- oder Außenspiegels oder einer Kamera, die mindestens eine Beleuchtungsvorrichtung nach einem der vorhergehenden Ansprüche umfasst.

13. Fahrzeugeinheit nach Anspruch 12, wobei
die mindestens eine Beleuchtungsvorrichtung eine Logolampe bereitstellt, die dazu ausgelegt ist, zumindest in Bezug auf das Fahrzeug beweglich und/oder an der Außenseite des Fahrzeugs anbringbar zu sein.

14. Kraftfahrzeug, das mindestens eine Fahrzeugeinheit gemäß Anspruch 12 oder 13 umfasst.

## Revendications

1. Dispositif d'éclairage (100), comprenant :
au moins un moyen d'éclairage (104) destiné à émettre de la lumière ; et
une unité de réflexion optique (110), comprenant :
au moins une surface réfléchissante (112, 114) ; et
au moins une surface (114) comprenant au moins un masque,
dans lequel l'unité de réflexion optique (110) est conçue pour recevoir la lumière émise par l'au moins un moyen d'éclairage (104) et projeter une image, un symbole, un logo, un motif et/ou une légende sur une surface de projection, **caractérisé en ce que**
l'unité de réflexion optique (110) est un composant optique unique au lieu de composants multiples comportant une pluralité de surfaces réfléchissantes (112, 114), au moins deux surfaces réfléchissantes étant sur des côtés opposés de l'unité de réflexion optique (110), dans lequel
• la lumière émise par l'au moins un moyen d'éclairage (104) est conçue pour entrer dans l'unité de réflexion optique (110) par un premier côté de l'unité de réflexion optique (110),
• la lumière projetée vers la surface de projection est conçue pour sortir de l'unité de réflexion optique (110) par un second côté de l'unité de réflexion optique (110),
• une de la pluralité de surfaces réfléchissantes (112, 114) étant formée sur le premier côté et une autre étant formée sur le second côté, et
• l'au moins une surface (114) comprenant l'au moins un masque est formée sur le premier côté.

2. Dispositif d'éclairage selon la revendication 1, dans lequel
l'unité de réflexion optique (110) comprend au moins quatre côtés et la lumière émise par l'au moins un moyen d'éclairage (104) est conçue pour être projetée sur au moins deux des au moins quatre côtés de l'unité de réflexion optique (110) avant d'être projetée vers la surface de projection.

3. Dispositif d'éclairage selon la revendication 1 ou 2, dans lequel la pluralité de surfaces réfléchissantes (112, 114) comprend au moins trois surfaces réfléchissantes, deux des au moins trois surfaces réfléchissantes étant sur un même côté de l'unité de réflexion optique et une des au moins trois surfaces réfléchissantes étant sur un côté opposé de l'unité de réflexion optique.

4. Dispositif d'éclairage selon l'une quelconque des revendications précédentes, dans lequel
la pluralité de surfaces réfléchissantes (112, 114) comprend des éléments optiques de forme libre métallisés ou à réflexion interne, l'au moins une surface réfléchissante étant de préférence au moins en partie plane ou courbe.

5. Dispositif d'éclairage selon l'une quelconque des revendications précédentes, dans lequel
l'au moins une surface (114) comprenant l'au moins un masque comprend une surface réfléchissante métallisée par ablation d'image et/ou un élément micro-optique, et/ou
l'au moins une surface (114) comprenant l'au moins un masque étant formée conjointement avec une (114) de la pluralité de surfaces réfléchissantes (112, 114).

6. Dispositif d'éclairage selon l'une quelconque des revendications précédentes, dans lequel
l'unité de réflexion optique (110) comprend au moins deux bords courbes et au moins un bord plan, l'unité de réflexion optique présentant de préférence une géométrie de forme libre.

7. Dispositif d'éclairage selon l'une quelconque des revendications précédentes, dans lequel
l'au moins une surface (114) comprenant l'au moins un masque est formée conjointement avec la surface réfléchissante (114) sur le premier côté.

8. Dispositif d'éclairage selon l'une quelconque des revendications précédentes, dans lequel
la lumière émise par l'au moins un moyen d'éclairage (104) est conçue pour toucher une surface intérieure de l'unité de réflexion optique (110) au moins quatre fois avant d'être projetée vers la surface de projection.

9. Dispositif d'éclairage selon l'une quelconque des revendications précédentes, dans lequel
l'au moins une surface réfléchissante (112, 114) est conçue pour dévier le chemin optique dans au moins l'une des plage de 35° à 145°, de 45° à 135°, de 60° à 120° et/ou d'environ 90°.

10. Dispositif d'éclairage selon l'une quelconque des revendications précédentes, dans lequel
l'au moins un masque est au moins modifiable ou réglable mécaniquement et/ou électriquement afin de changer l'image, le symbole, le logo et/ou la légende que le masque est conçu pour afficher sur la surface de projection.

11. Dispositif d'éclairage selon l'une quelconque des revendications précédentes, dans lequel
le moyen d'éclairage émet la lumière selon un angle compris entre approximativement 0 degré et approximativement 20 degrés par rapport à un axe normal à la surface de projection.

12. Unité de véhicule d'un véhicule à moteur sous la forme d'un rétroviseur intérieur ou extérieur ou d'une caméra, comprenant au moins un dispositif d'éclairage selon l'une quelconque des revendications précédentes.

13. Unité de véhicule selon la revendication 12, dans laquelle
l'au moins un dispositif d'éclairage fournit une lampe à logo, qui est adaptée pour être au moins mobile par rapport au véhicule et/ou apte à être fixée à l'extérieur du véhicule.

14. Véhicule à moteur, comprenant au moins une unité de véhicule selon la revendication 12 ou 13.
